# EUROPÄISCHE PATENTANMELDUNG

(11) **EP 3 751 539 A1**
(43) Veröffentlichungstag der Anmeldung: **16.12.2020**
(21) Anmeldenummer: 19180023.4
(22) Anmeldetag: 13.06.2019
(51) Int. Cl.: G08G 1/081, G08G 1/01, G01C 21/34, G08G 1/0967, G08G 1/0968

(54) **VERFAHREN ZUR VERKEHRSREGELUNG UND VERKEHRSREGELUNGSSYSTEM**

(71) Anmelder: Siemens Aktiengesellschaft, 80333 München (DE)
(72) Erfinder: Sterzing, Volkmar, 85579 Neubiberg (DE); Tokic, Michel, 88069 Tettnang (DE); Weber, Marc Christian, 80803 München (DE); Frank, Harald, 85635 Höhenkirchen-Siegertsbr (DE); Rudolph, Felix, 81549 München (DE)

(57) **Zusammenfassung**

Erfindungsgemäß werden mehrere Signalanlagen (S1, S2) eines Verkehrsgebiets (VG) jeweils durch ein lernbasiertes Verkehrsregelungsmodul (VR1, VR2) gesteuert. Letzteres ist darauf trainiert, die jeweilige Signalanlage (S1, S2) anhand von Verkehrsdaten (VD1, VD2) und einem vorgebbaren Zielwert (ZVD1, ZVD2, ZSD1, ZSD2) für eine verkehrsrelevante, signalanlagenspezifische Zielgröße (VD1, VD2, SD1, SD2) derart zu steuern, dass sich die signalanlagenspezifische Zielgröße dem Zielwert annähert. Weiterhin werden Schadstoffdaten (SD1, SD2) über eine aktuelle Schadstoffbelastung des Verkehrsgebiets (VG) erfasst und zu einem lernbasierten, signalanlagenübergreifenden Schadstoffprädiktionsmodul (SPM) übermittelt. Letzteres ist darauf trainiert, eine Schadstoffverteilung im Verkehrsgebiet (VG) anhand von Schadstoffdaten zu prädizieren. Anhand einer durch das Schadstoffprädiktionsmodul (SPM) prädizierten Schadstoffverteilung (PSD) werden signalanlagenspezifische Zielwerte (ZVD1, ZVD2, ZSD1, ZSD2) ermittelt und jeweils zu einem Verkehrsregelungsmodul (VR1, VR2) übermittelt. Durch das jeweilige Verkehrsregelungsmodul (VR1, VR2) wird dann die jeweilige Signalanlage (S1, S2) abhängig von aktuell gemessenen Verkehrsdaten (VD1, VD2) und dem jeweiligen signalanlagenspezifischen Zielwert (ZVD1, ZVD2, ZSD1, ZSD2) gesteuert.

## Beschreibung

In vielen Städten, insbesondere in Ballungsgebieten oder anderen Verkehrsgebieten mit hohem Verkehrsaufkommen, stellen verkehrsbedingte Schadstoffbelastungen, insbesondere durch Feinstaub, Stickoxide oder andere Emissionen von Verbrennungskraftmaschinen ein vordringliches Problem dar. Dieses Problem wird häufig durch eine, insbesondere in Ballungsgebieten ansteigende Bevölkerungs- oder Verkehrsdichte verschärft.

Als Maßnahme zur Schadstoffreduktion werden vielerorts Fahrverbote für bestimmte Kraftfahrzeugtypen auf hochbelasteten Straßen verhängt. Derartige Fahrverbote können jedoch zu unerwünschten Verkehrsproblemen auf Ausweichstrecken führen und dort die Schadstoffbelastung erhöhen.

Weitere Maßnahmen zur Schadstoffreduktion stellen auf eine optimierte Verkehrsregelung ab, wodurch Wartezeiten oder Staus verringert werden sollen. Die Wirkung derartiger Verkehrsregelungsmaßnahmen auf eine tatsächliche Schadstoffbelastung hängt jedoch oft in schwer vorhersehbarer Weise von Wetterbedingungen oder anderen Einflussgrößen ab.

Es ist Aufgabe der vorliegenden Erfindung, ein Verfahren zur Verkehrsregelung und ein Verkehrsregelungssystem zu schaffen, die eine effiziente Verkehrsregelung mit einer wirksamen Kontrolle der Schadstoffbelastung kombinieren.

Gelöst wird diese Aufgabe durch ein Verfahren mit den Merkmalen des Patentanspruchs 1, durch ein Verkehrsregelungssystem mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Erfindungsgemäß werden zur Verkehrsregelung mehrere Signalanlagen eines Verkehrsgebiets jeweils durch ein lernbasiertes Verkehrsregelungsmodul gesteuert. Das jeweilige Verkehrsregelungsmodul ist darauf trainiert, die jeweilige Signalanlage anhand von Verkehrsdaten und einem vorgebbaren Zielwert für eine verkehrsrelevante, signalanlagenspezifische Zielgröße derart zu steuern, dass sich die signalanlagenspezifische Zielgröße dem Zielwert annähert. Als Zielgrößen können insbesondere lokale Schadstoffwerte, ein lokaler Verkehrsdurchsatz und/oder lokale Wartezeiten verwendet werden. Weiterhin werden Schadstoffdaten über eine aktuelle Schadstoffbelastung, insbesondere durch Stickoxide und/oder Feinstaub des Verkehrsgebiets erfasst und zu einem lernbasierten, signalanlagenübergreifenden Schadstoffprädiktionsmodul übermittelt. Das Schadstoffprädiktionsmodul ist darauf trainiert, eine Schadstoffverteilung im Verkehrsgebiet anhand von Schadstoffdaten zu prädizieren. Anhand einer durch das Schadstoffprädiktionsmodul prädizierten Schadstoffverteilung werden signalanlagenspezifische Zielwerte ermittelt und jeweils zu einem Verkehrsregelungsmodul übermittelt. Durch das jeweilige Verkehrsregelungsmodul wird dann die jeweilige Signalanlage abhängig von aktuell gemessenen Verkehrsdaten und dem jeweiligen signalanlagenspezifischen Zielwert gesteuert.

Zum Ausführen des erfindungsgemäßen Verfahrens sind ein Verkehrsregelungssystem, ein Computerprogrammprodukt sowie ein computerlesbares, insbesondere nichtflüchtiges Speichermedium vorgesehen.

Das erfindungsgemäße Verfahren sowie das erfindungsgemäße Verkehrsregelungssystem können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Durch die Kombination von lokal trainierten Verkehrsregelungsmodulen mit einem signalanlagenübergreifend trainierten Schadstoffprädiktionsmodul können insbesondere Schadstoffbelastung, Verkehrsfluss und/oder andere verkehrsrelevante Größen im Verkehrsgebiet in der Regel wirksam und in ausbalancierter Weise signalanlagenübergreifend optimiert werden. Insbesondere können vorzugsweise Schadstoffemissionen unterhalb von vorgegebenen Grenzwerten gehalten werden, wobei gleichzeitig Wartezeiten oder Verkehrsverzögerungen minimiert werden. Darüber hinaus können existierende verkehrstechnische Anlagen in vorteilhafter Weise genutzt werden.

Vorteilhafte Ausführungsformen und Weiterbildungen der Erfindung sind in den abhängigen Ansprüchen angegeben.

Gemäß einer vorteilhaften Ausführungsform der Erfindung kann das Schadstoffprädiktionsmodul darauf trainiert sein, eine Schadstoffverteilung zusätzlich anhand von lokalen oder globalen Verkehrsdaten und/oder Umgebungsdaten zu prädizieren. Als Umgebungsdaten können insbesondere Tageszeit, Kalenderdatum und/oder Wetterdaten, wie z.B. Daten über Windgeschwindigkeit oder Windrichtung genutzt werden. Zur Prädiktion der Schadstoffverteilung können dann aktuell gemessene Verkehrsdaten und/oder Umgebungsdaten zum Schadstoffprädiktionsmodul übertragen werden. Insofern die Schadstoffverteilung in der Regel stark vom Verkehrsaufkommen und von aktuellen Umgebungsbedingungen beeinflusst wird, erlaubt die Einbeziehung dieser Daten in der Regel eine erheblich genauere Vorhersage.

Weiterhin kann ein jeweiliges Verkehrsregelungsmodul darauf trainiert sein, die jeweilige Signalanlage zusätzlich anhand von signalanlagenspezifischen Schadstoffdaten und/oder Umgebungsdaten derart zu steuern, dass sich die signalanlagenspezifische Zielgröße dem Zielwert annähert. Die Steuerung der jeweiligen Signalanlage durch das jeweilige Verkehrsregelungsmodul kann dann abhängig von aktuell gemessenen Schadstoffdaten und/oder Umgebungsdaten erfolgen. Durch die Einbeziehung zusätzlicher Daten beim Training und bei der Steuerung kann in der Regel die Annäherung der Zielgröße an den Zielwert verbessert werden.

Gemäß einer vorteilhaften Ausführungsform der Erfindung kann zur Ermittlung der signalanlagenspezifischen Zielwerte die prädizierte Schadstoffverteilung zu einem Optimierungsmodul übermittelt werden. Durch das Optimierungsmodul können signalanlagenspezifische Zielwertvarianten generiert werden, aus denen anhand der übermittelten prädizierten Schadstoffverteilung signalanlagenspezifische Zielwerte selektiert werden, durch die sich eine signalanlagenübergreifende Optimierungsgröße einem vorgegebenen Optimierungsziel annähert. Die Optimierungsgröße kann insbesondere eine oder mehrere verkehrsrelevante und/oder umweltrelevante Größen im Verkehrsgebiet betreffen, wie beispielsweise eine Gesamtschadstoffkonzentration, einen Gesamtverkehrsdurchsatz, eine Gesamtwartezeit und/oder eine ggf. gewichtete Kombination entsprechender lokaler Größen. Als Optimierungsziel kann z.B. eine Optimierung eines Verkehrsdurchsatzes im Verkehrsgebiet unter der Nebenbedingung einer Nichtüberschreitung von Schadstoffgrenzwerten vorgegeben werden.

Vorteilhafterweise können zur Ermittlung der signalanlagenspezifischen Zielwerte signalanlagenspezifische Verkehrsdaten, Umgebungsdaten und/oder Schadstoffdaten zum Optimierungsmodul übermittelt werden. Die die Selektion der signalanlagenspezifischen Zielwerte kann dann abhängig von den übermittelten signalanlagenspezifischen Verkehrsdaten, Umgebungsdaten und/oder Schadstoffdaten erfolgen. Durch Einbeziehung zusätzlicher Daten kann die Optimierung der Zielwerte in der Regel verbessert werden.

Vorzugsweise können zur Ermittlung der signalanlagenspezifischen Zielwerte eine Partikelschwarmoptimierung, ein genetisches Optimierungsverfahren, ein lernbasiertes Optimierungsmodell und/oder ein Gradientenabstiegsverfahren verwendet werden. Für die vorstehenden Optimierungsverfahren sind eine Vielzahl von Standardprogrammen verfügbar.

Nach einer vorteilhaften Weiterbildung der Erfindung können lokal gemessene Schadstoffdaten zu einem lernbasierten Kalibrierungsmodul übermittelt werden, das darauf trainiert ist, von Referenz-Messstationen gemessene Referenz-Schadstoffdaten anhand von lokal gemessenen Schadstoffdaten zu reproduzieren. Vom Kalibrierungsmodul ausgegebene, kalibrierte Schadstoffdaten können dann zur Prädiktion der Schadstoffverteilung und/oder zum Steuern einer jeweiligen Signalanlage verwendet werden. Mittels des trainierten Kalibrierungsmoduls können aus lokal gemessenen Schadstoffdaten zumindest näherungsweise kalibrierte Schadstoffdaten abgeleitet werden, wodurch sich eine Genauigkeit der Prädiktion der Schadstoffverteilung in der Regel erheblich steigern lässt.

Vorteilhafterweise können signalanlagenspezifische Verkehrsdaten, Umgebungsdaten und/oder Schadstoffdaten bei einer jeweiligen Signalanlage gemessen werden. Vorzugsweise können existierende sog. SPaT-Boxen (SPaT: Signal Phase and Timing) mit Schadstoffsensoren zur Messung von Schadstoffdaten und/oder mit Umgebungssensoren, z.B. zur Messung von Wetterdaten ausgerüstet werden.

Nach einer weiteren vorteilhaften Weiterbildung der Erfindung können Navigationsgeräte im Verkehrsgebiet durch ein lernbasiertes Verkehrsregelungsmodul gesteuert werden, das darauf trainiert ist, Navigationsgeräte anhand von Verkehrsdaten und einem vorgebbaren Zielwert für eine verkehrsrelevante Zielgröße derart zu steuern, dass sich die Zielgröße dem Zielwert annähert. Die Navigationsgeräte können dann durch das Verkehrsregelungsmodul abhängig von aktuell gemessenen Verkehrsdaten und einem anhand der prädizierten Schadstoffverteilung ermittelten Zielwert gesteuert werden. Eine solche Steuerung von Navigationsgeräten lässt sich in der Regel auf einfache Weise in das erfindungsgemäße Verfahren einbeziehen und erlaubt eine zusätzliche effektive Verkehrsbeeinflussung.

Ein Ausführungsbeispiel der Erfindung wird nachfolgend anhand der Zeichnung näher erläutert. Dabei zeigen jeweils in schematischer Darstellung:
- Figur 1: ein Verkehrsgebiet mit einer Vielzahl von Signalanlagen und einer zentralen Steuerung,
- Figur 2: ein Verkehrsregelungsmodul einer Signalanlage in einer Trainingsphase,
- Figur 3: ein signalanlagenübergreifendes Schadstoffprädiktionsmodul in einer Trainingsphase,
- Figur 4: ein Kalibrierungsmodul in einer Trainingsphase und
- Figur 5: ein trainiertes Verkehrsregelungssystem bei der Verkehrsregelung im Verkehrsgebiet

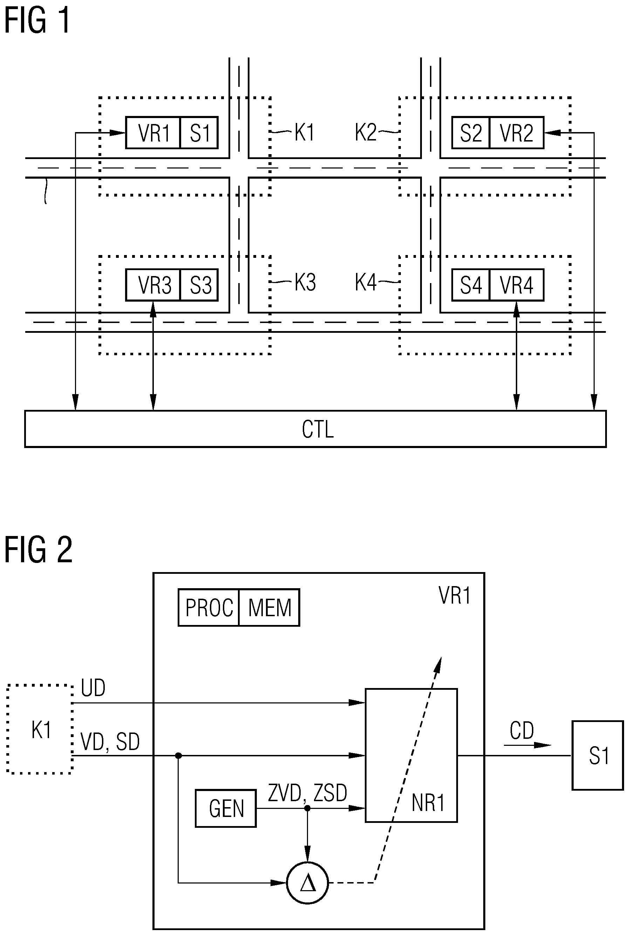

Figur 1 zeigt in schematischer Darstellung ein Verkehrsgebiet VG, z.B. ein Verkehrsnetz einer Stadt mit einer Vielzahl von Signalanlagen S1,...,S4 und mit einer zentralen Steuerung CTL in schematischer Darstellung. Das Verkehrsgebiet VG weist ein Straßennetz SN mit einer Vielzahl von Einmündungen oder Kreuzungen K1,...,K4 auf. Alternativ oder zusätzlich zum Straßennetz SN kann ein Schienennetz oder ein Netz anderer Verkehrswege vorgesehen sein. Die Signalanlagen S1,...,S4 sind jeweils an einer der Kreuzungen K1,... bzw. K4 installiert und können insbesondere durch eine Ampelanlage oder eine andere Lichtzeichenanlage, eine Verkehrszeichenanlage, eine Kreuzungssteuerung oder eine andere Verkehrsbeeinflussungsanlage realisiert sein.

Die Signalanlagen S1,...,S4 werden jeweils durch ein daran gekoppeltes Verkehrsregelungsmodul VR1,... bzw. VR4 gesteuert. Die Verkehrsregelungsmodule VR1,...,VR4 sind lernbasiert und dienen jeweils zum signalanlagenspezifischen Steuern oder Regeln des lokalen Verkehrs abhängig von aktuellen Verkehrsdaten, Schadstoffdaten und Umgebungsdaten.

Die Verkehrsregelungsmodule VR1,...,VR4 sind jeweils durch Verfahren des maschinellen Lernens darauf trainierbar oder trainiert, eine Steuerung von Signalphasen oder anderer Verkehrsleitaktionen der Signalanlagen S1,...,S4 zu optimieren. Unter dem Begriff Optimieren sei hier und im Folgenden auch ein Annähern an ein Optimum verstanden. Vorzugsweise können derartige Verkehrsregelungsmodule VR1,...,VR4 jeweils in eine sogenannte SPaT-Box einer jeweiligen Signalanlage S1,... bzw. S4 integriert oder daran gekoppelt werden. Zur Erfassung von lokalen Verkehrsdaten, lokalen Schadstoffdaten und Umgebungsdaten für die Verkehrsregelungsmodule VR1,...,VR4 können diese oder die SPaT-Boxen an lokale Sensoren (nicht dargestellt) gekoppelt oder damit ausgerüstet werden.

Als lokale Verkehrsdaten können insbesondere Anzahl und Geschwindigkeit von Fahrzeugen durch Fahrzeugzählsensoren, Kameras oder Geschwindigkeitssensoren oder andere Angaben über eine aktuelle Verkehrsbelastung erfasst werden. Lokale Schadstoffdaten können durch Schadstoffsensoren, insbesondere Stickoxidsensoren und Feinstaubsensoren erfasst werden. Darüber hinaus können durch Umgebungssensoren Wetterdaten, Winddaten und/oder Temperaturdaten lokal gemessen werden.

Die Verkehrsregelungsmodule VR1,...,VR4 sind jeweils an die zentrale Steuerung CTL gekoppelt. Die Kopplung dient zum bidirektionalen Datenaustausch zwischen der zentralen Steuerung CTL und den Verkehrsregelungsmodulen VR,...,VR4, der in Figur 1 durch Doppelpfeile veranschaulicht ist.

Die zentrale Steuerung CTL dient zur signalanlagenübergreifenden Steuerung des Verkehrs im Verkehrsgebiet VG und kann als Teil eines Verkehrsmanagementsystems oder Verkehrsleitsystems ausgebildet sein.

Figur 2 zeigt in schematischer Darstellung das Verkehrsregelungsmodul VR1 der Signalanlage S1 in einer Trainingsphase. Vorzugsweise werden die anderen Verkehrsregelungsmodule, hier VR2, VR3 und VR4 im Verkehrsgebiet VG wie das Verkehrsregelungsmodul VR1 trainiert und sind ebenso implementiert. In Figur 2 werden gleiche oder korrespondierende Bezugszeichen für gleiche oder korrespondierende Entitäten wie in Figur 1 verwendet, die wie oben beschrieben implementiert oder realisiert sein können.

Das lernbasierte Verkehrsregelungsmodul VR1 ist an die Signalanlage S1 gekoppelt und steuert diese durch signalanlagenspezifische Steuerdaten CD. Das Verkehrsregelungsmodul VR1 kann Teil der zugeordneten Signalanlage S1 sein oder ganz oder teilweise extern zu dieser angeordnet sein. Weiterhin verfügt das Verkehrsregelungsmodul VR1 über einen Prozessor PROC zum Ausführen von darauf ablaufenden Lern- und Steuerverfahren sowie über einen mit dem Prozessor PROC gekoppelten Speicher MEM zum Speichern von bei der Ausführung anfallenden Daten.

Das Verkehrsregelungsmodul VR1 weist ein Verkehrsregelungsmodell NR1 auf, das durch ein Verfahren des bestärkenden Lernens trainierbar ist. Ein Verfahren des bestärkenden Lernens wird häufig auch als Reinforcement Learning bezeichnet. Das Verkehrsregelungsmodell NR1 stellt eine sogenannte Control Policy im Sinne des maschinellen Lernens dar. Das Verkehrsregelungsmodell NR1 ist vorzugsweise als künstliches neuronales Netz implementiert.

Das Verkehrsregelungsmodell NR1 gibt als Ausgabedaten die Steuerdaten CD zum Steuern der Signalanlage S1 aus. Durch diese Steuerdaten CD können Signalphasen, Ampelphasen oder andere Verkehrsleitaktionen der Signalanlage S1 gesteuert werden. Als Eingabedaten werden dem Verkehrsregelungsmodell NR1 lokale verkehrsrelevante Daten der Kreuzung K1 zugeführt. Im vorliegenden Ausführungsbeispiel sind dies aktuelle lokale Verkehrsdaten VD, z.B. über Anzahl, Durchsatz und Geschwindigkeit von auf der Kreuzung K1 befindlichen Kraftfahrzeugen, lokale Schadstoffdaten SD, z.B. über eine Feinstaub- oder Stickoxidbelastung auf der Kreuzung K1 sowie Umgebungsdaten UD. Als Umgebungsdaten UD können signalanlagenübergreifende Daten, wie Tageszeit, Kalenderdatum oder allgemeine Wetterdaten erfasst werden oder signalanlagenspezifische Daten über lokale Temperaturen, lokale Windstärken oder lokale Windrichtungen.

Als weitere Eingabedaten werden dem Verkehrsregelungsmodell NR1 unterschiedlich vorgebbare Zielwerte ZVD und ZSD für eine oder mehrere verkehrsrelevante, signalanlagenspezifische Zielgrößen zugeführt. Im vorliegenden Ausführungsbeispiel werden lokale Verkehrsdaten VD, wie z.B. Verkehrsdurchsatz und Wartezeiten und lokale Schadstoffdaten SD, wie z.B. Feinstaubwerte oder Stickoxidkonzentrationen als Zielgrößen verwendet. Alternativ oder zusätzlich können auch mehrere unterschiedliche verkehrsrelevante Größen in einer oder mehreren Zielgrößen, z.B. als gewichtete Summe kombiniert werden.

Das Verkehrsregelungsmodell NR1 soll nun darauf trainiert werden, die Signalanlage S1 anhand von aktuell gemessenen Verkehrsdaten VD, Schadstoffdaten SD und Umgebungsdaten UD und vorgebbaren Zielwerten ZVD und ZSD für die Zielgrößen VD und SD derart zu steuern, dass sich die Zielgrößen VD und SD den Zielwerten ZVD und ZSD annähern. Das heißt, wenn beispielsweise ein höherer Zielwert für eine lokale Wartezeit vorgegeben wird, soll die Signalanlage S1 durch das trainierte Verkehrsregelungsmodell NR1 so gesteuert werden, dass sich die lokale Wartezeit erhöht bzw. dem hierfür vorgesehenen Zielwert möglichst annähert. Auf diese Weise kann z.B. erreicht werden, dass weniger Verkehr in bestimmte Straßen fließt, so dass dort ggf. die Schadstoffemissionen sinken.

Das Training des Verkehrsregelungsmodells NR1 erfolgt vorzugsweise mittels eines Verfahrens des maschinellen bestärkenden Lernens. Unter einem Training sei allgemein eine Optimierung einer Abbildung von Eingabedaten, hier VD, SD, UD, ZVD und ZSD eines parametrisierten Systemmodells, hier des neuronalen Netzes NR1, auf Ausgabedaten, hier die Steuerdaten CD verstanden. Diese Abbildung wird nach vorgegebenen, gelernten und/oder zu lernenden Kriterien während einer Trainingsphase optimiert. Als Kriterien können z.B. bei Steuermodellen ein Erfolg einer Steueraktion oder bei Prädiktionsmodellen ein Prädiktionsfehler herangezogen werden. Durch das Training kann z.B. eine Vernetzungsstruktur von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden, für das eine Vielzahl von effizienten Optimierungsverfahren verfügbar sind.

Im vorliegenden Ausführungsbeispiel werden eine Vielzahl unterschiedlicher Zielwerte ZVD für die Zielgröße VD und eine Vielzahl unterschiedlicher Zielwerte ZSD für die Zielgröße SD durch einen Zielwertgenerator GEN des Verkehrsregelungsmoduls VR1 generiert. Alternativ oder zusätzlich können die Zielwerte ZVD und ZSD ganz oder teilweise durch die zentrale Steuerung CTL oder in einer Cloud-Umgebung generiert werden. Das Verkehrsregelungsmodell NR1 soll für die generierten Zielwerte ZVD und ZSD darauf trainiert werden, abhängig von den weiteren Eingabedaten VD, SD und UD derartige Steuerdaten CD zu generieren, die die Signalanlage S1 in einer Weise steuern, dass sich die Zielgrößen VD und SD den jeweiligen Zielwerten ZVD und ZSD annähern. Zu diesem Zweck werden die Zielwerte ZVD mit den Zielgrößen VD sowie die Zielwerte ZSD mit den Zielgrößen SD verglichen und hierbei eine Abweichung zwischen Zielwerten ZVD, ZSD und Zielgrößen VD, SD ermittelt. Diese Abweichung wird zum Verkehrsregelungsmodell NR1 zurückgeführt, dass - wie in Figur 2 durch einen strichlinierten Pfeil angedeutet - darauf trainiert wird, diese Abweichung zu minimieren. Hierfür kann eine Vielzahl von standardisierten Trainingsverfahren, insbesondere des bestärkenden Lernens, eingesetzt werden. Die zu minimierende Abweichung kann dabei durch eine geeignete Kostenfunktion repräsentiert werden. Zur Minimierung der Abweichung kann insbesondere eine Gradientenabstiegsmethode verwendet werden.

Ein auf das Erreichen oder die Annäherung an unterschiedliche Zielwerte steuerbares Lernmodell wird häufig auch als Variable-Objective-Policy, abgekürzt VOP bezeichnet. Insbesondere kann dies durch eine steuerbare Reinforcement-Learning-Policy implementiert werden, bei der die Zielwerte als Eingabedaten bei der Ausführung der Policy vorgegeben werden.

Vorzugsweise wird das Verkehrsregelungsmodell NR1 nach einem initialen Training im laufenden Betrieb des Verkehrsregelungsmoduls VR1 mit aktuell erfassten Verkehrsdaten VD, Schadstoffdaten SD und Umgebungsdaten UD nachtrainiert. Alternativ oder zusätzlich kann das Training auch lokal in einer Cloud-Umgebung stattfinden, wobei hierfür erforderliche Daten dorthin übertragen werden.

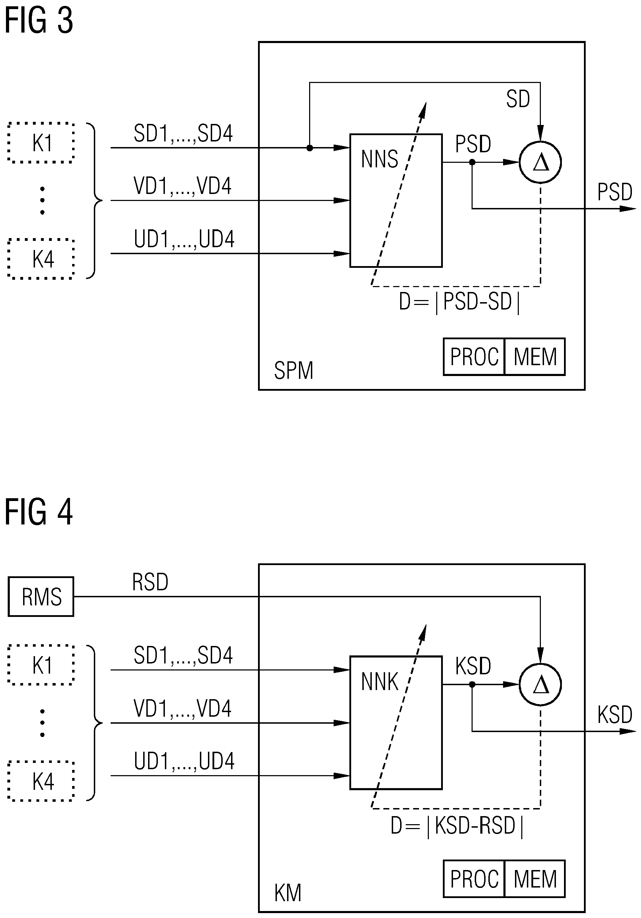

Figur 3 zeigt in schematischer Darstellung ein signalanlagenübergreifendes, lernbasiertes Schadstoffprädiktionsmodul SPM in einer Trainingsphase. Insofern in Figur 3 die gleichen oder korrespondierende Bezugszeichen verwendet werden wie in den vorangegangenen Figuren, werden hierdurch gleiche oder korrespondierende Entitäten bezeichnet, die wie oben beschrieben ausgestaltet oder implementiert sein können.

Das Schadstoffprädiktionsmodul SPM, das als Teil der zentralen Steuerung CTL implementiert sein kann, weist ein trainierbares Schadstoffprädiktionsmodell NNS auf, das vorzugsweise als künstliches neuronales Netz implementiert ist.

Das Schadstoffprädiktionsmodell NNS soll darauf trainiert werden, eine Schadstoffverteilung im Verkehrsgebiet VG anhand zugeführter Schadstoffdaten, Verkehrsdaten und Umgebungsdaten möglichst zuverlässig zu prädizieren. Zu diesem Zweck werden zum Schadstoffprädiktionsmodul SPM, Schadstoffdaten SD1, aktuell gemessene Verkehrsdaten VD1 und Umgebungsdaten UD1 vom Verkehrsregelungsmodul VR1 der Kreuzung K1 übermittelt. Entsprechend werden Schadstoffdaten SD2, SD3 und SD4, Verkehrsdaten VD2, VD3 und VD4 sowie Umgebungsdaten UD2, UD3 und UD4 von den Verkehrsregelungsmodulen VR2, VR3 und VR4 der Kreuzungen K2, K3 und K4 zum Schadstoffprädiktionsmodul SPM übermittelt. Die Schadstoffdaten SD1,...,SD4, die aktuell gemessenen Verkehrsdaten VD1,...,VD4 sowie die Umgebungsdaten UD1,...,UD4 können wie oben beschrieben zusammengesetzt sein und werden dem Schadstoffprädiktionsmodell NNS als Eingabedaten zugeführt.

Als resultierende Ausgabedaten gibt das Schadstoffprädiktionsmodell NNS eine prädizierte Schadstoffverteilung PSD aus. Die prädizierte Schadstoffverteilung PSD umfasst vorzugsweise räumlich und/oder zeitlich aufgelöste Schadstoffwerte, die eine zum späteren Prognosezeitpunkt im Verkehrsgebiet VG zu erwartende Schadstoffverteilung quantifizieren.

Zum Trainieren des Schadstoffprädiktionsmodells NNS werden die Ausgabedaten PSD mit zum späteren Prognosezeitpunkt tatsächlich erfassten Schadstoffdaten SD verglichen und ein Abstand D=|PSD-SD| zwischen prognostizierter Schadstoffbelastung PSD und tatsächlich eingetretener Schadstoffbelastung SD ermittelt. Die tatsächlich eingetretene Schadstoffbelastung SD kann aus den zum Prognosezeitpunkt tatsächlich erfassten Schadstoffdaten SD1,...,SD4 abgeleitet werden. Der Abstand D repräsentiert einen Prädiktionsfehler des Schadstoffprädiktionsmodells NNS und wird zu diesem zurückgeführt. Anhand des zurückgeführten Abstands D wird das Schadstoffprädiktionsmodell NNS - wie in Figur 3 durch einen strichliierten Pfeil angedeutet - darauf trainiert, den Abstand D im Mittel zu minimieren. Auf diese Weise wird das Schadstoffprädiktionsmodell NNS dazu befähigt, eine verhältnismäßig genaue Prognose einer zu erwartenden Schadstoffverteilung PSD zu ermitteln. Das trainierte Schadstoffprädiktionsmodell NNS stellt damit gewissermaßen ein signalanlagenübergreifendes, flächendeckendes Verschmutzungsmodell für das Verkehrsgebiet VG dar.

Figur 4 zeigt in schematischer Darstellung ein lernbasiertes, signalanlagenübergreifendes Kalibrierungsmodul KM in einer Trainingsphase. Insofern in Figur 4 die gleichen oder korrespondierende Bezugszeichen verwendet werden wie in den vorangegangenen Figuren, werden hierdurch die gleichen oder korrespondierende Entitäten bezeichnet, die wie oben beschrieben, ausgestaltet oder implementiert sein können.

Das Kalibrierungsmodul KM verfügt über ein trainierbares Kalibrierungsmodell NNK, das vorzugsweise als künstliches neuronales Netz implementiert ist. Das Kalibrierungsmodul KM kann als Teil der zentralen Steuerung CTL implementiert sein oder ganz oder teilweise extern zur zentralen Steuerung.

Das Kalibrierungsmodell NNK soll darauf trainiert werden, von Referenz-Messstationen RMS des Verkehrsgebiets VG gemessene Referenz-Schadstoffdaten RSD anhand von lokal gemessenen Schadstoffdaten SD1,...,SD4, lokal gemessenen Verkehrsdaten VD1,...,VD4 sowie von Umgebungsdaten UD1,...,UD4 möglichst gut zu reproduzieren. Die lokalen Schadstoffdaten SD1,...,SD4 und die lokalen Verkehrsdaten VD1,...,VD4 werden von lokalen Messstationen, im vorliegenden Ausführungsbeispiel von den lokalen Sensoren der Verkehrsregelungsmodule VR1,...,VR4 gemessen. Zum Training des Kalibrierungsmodells NNK werden die Referenz-schadstoffdaten RSD von den Referenz-Messstationen RMS und die Schadstoffdaten SD1,...,SD4, die Verkehrsdaten VD1,...,VD4 und die Umgebungsdaten UD1,...,UD4 von den Verkehrsregelungsmodulen VR1,...,VR4 der Kreuzungen K1,...,K4 zum Kalibrierungsmodul KM übermittelt. Die Schadstoffdaten SD1,...,SD4, Verkehrsdaten VD1,...,VD4 und Umgebungsdaten UD1,...,UD4 werden dem Kalibrierungsmodell NNK als Eingabedaten zugeführt und können wie oben beschrieben zusammengesetzt sein.

Als resultierende Ausgabedaten gibt das Kalibrierungsmodell NNK kalibrierte Schadstoffdaten KSD zur Prädiktion der Schadstoffverteilung und/oder zum Steuern einer jeweiligen Signalanlage aus. Die kalibrierten Schadstoffdaten KSD können wie die lokalen Schadstoffdaten SD1,...,SD4 strukturiert sein und anstelle von oder zusätzlich zu diesen zum Schadstoffprädiktionsmodul SPM übermittelt werden, um eine genauere Prädiktion der Schadstoffverteilung zu erreichen.

Zum Trainieren des Kalibrierungsmodells NNK wird zumindest ein Teil der Ausgabedaten KSD mit den Referenz-Schadstoffdaten RSD verglichen und ein Abstand D=|RSD-KSD| zwischen Ausgabedaten KSD und Referenz-Schadstoffdaten RSD ermittelt.

Der Abstand D repräsentiert hierbei einen Kalibrierungsfehler des Kalibrierungsmodells NNK und wird zu diesem zurückgeführt. Anhand des zurückgeführten Abstands D wird das Kalibrierungsmodell NNK - wie in Figur 4 durch einen strichliierten Pfeil angedeutet - darauf trainiert, den Abstand D im Mittel zu minimieren. Auf diese Weise wird das Kalibrierungsmodell NNK und damit das Kalibrierungsmodul KM dazu befähigt, aus gegebenenfalls unkalibrierten Schadstoffdaten SD1,...,SD4, Verkehrsdaten VD1,...,VD4 und Umgebungsdaten UD1,...,UD4 zumindest näherungsweise kalibrierte Schadstoffdaten KSD abzuleiten.

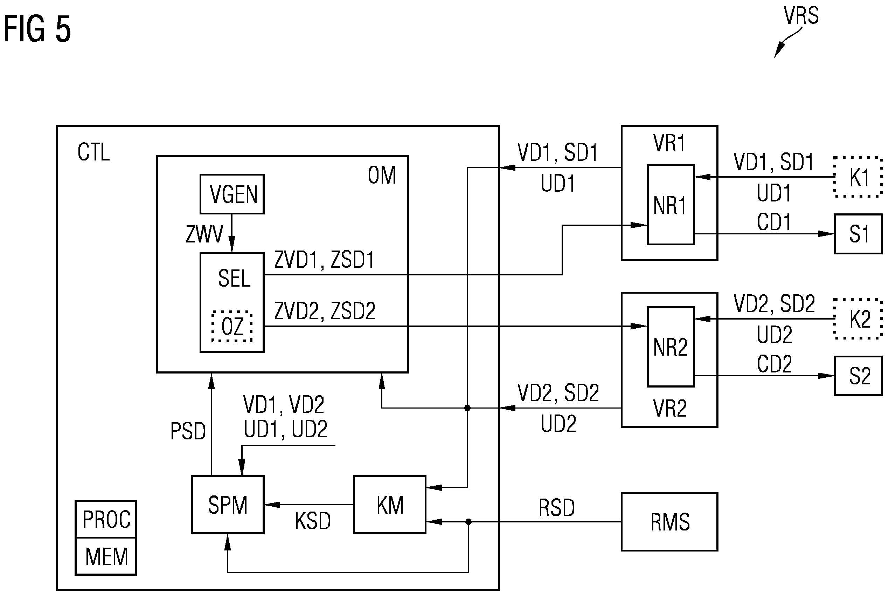

Figur 5 zeigt in schematischer Darstellung ein trainiertes Verkehrsregelungssystem VRS bei der Verkehrsregelung im Verkehrsgebiet VG. Insofern in Figur 5 die gleichen oder korrespondierende Bezugszeichen verwendet werden wie in den vorangegangenen Figuren, werden hierdurch die gleichen oder korrespondierende Entitäten bezeichnet, die wie oben beschrieben, ausgestaltet oder implementiert sein können.

Das Verkehrsregelungssystem VRS verfügt über eine zentrale Steuerung CTL und regelt den Verkehr in Verkehrsgebiet VG durch Verkehrsleitaktionen einer Vielzahl von Signalanlagen mit jeweils einem signalanlagenspezifischen Verkehrsregelungsmodul. Aus Übersichtlichkeitsgründen sind in Figur 5 nur zwei Signalanlagen S1 und S2 mit jeweils zugeordnetem Verkehrsregelungsmodul VR1 bzw. VR2 dargestellt. Wie oben bereits beschrieben, weist das Verkehrsregelungsmodul VR1 ein Verkehrsregelungsmodell NR1 und das Verkehrsregelungsmodul VR2 ein Verkehrsregelungsmodell NR2 auf. Die Verkehrsregelungsmodelle NR1 und NR2 sind wie oben beschrieben trainiert.

Das Verkehrsregelungsmodul VR1 erfasst von der Kreuzung K1, wie oben beschrieben, aktuell gemessene Verkehrsdaten VD1, aktuell gemessene Schadstoffdaten SD1 sowie Umgebungsdaten UD1 und führt diese dem trainierten Verkehrsregelungsmodell NR1 als Eingabedaten zu. Darüber hinaus werden die erfassten Daten VD1, SD1 und UD1 vom Verkehrsregelungsmodul VR1 zur zentralen Steuerung CTL übermittelt. Entsprechend werden aktuell gemessene Verkehrsdaten VD2, aktuell gemessene Schadstoffdaten SD2 sowie Umgebungsdaten UD2 der Kreuzung K2 durch das Verkehrsregelungsmodul VR2 erfasst, dessen trainiertem Verkehrsregelungsmodell NR2 als Eingabedaten zugeführt sowie zur zentralen Steuerung CTL übermittelt.

Die zentrale Steuerung CTL dient erfindungsgemäß zur Ermittlung von signalanlagenspezifischen Zielwerten für lokale Zielgrößen der jeweiligen Signalanlage S1 bzw. S2. Im vorliegenden Ausführungsbeispiel werden für die Signalanlage S1 Zielwerte ZVD1 für die Zielgröße VD1 und Zielwerte ZSD1 für die Zielgröße SD1 ermittelt. Entsprechend werden für die Signalanlage S2 Zielwerte ZVD2 für die Zielgröße VD2 und Zielwerte ZSD2 für die Zielgröße SD2 ermittelt. Die Zielwerte ZVD1, ZSD1, ZVD2 und ZSD2 sollen so ermittelt und den trainierten Verkehrsregelungsmodulen VR1 und VR2 vorgegeben werden, dass der Verkehr im Verkehrsgebiet VG durch die Verkehrsregelungsmodule VR1 und VR2 in signalanlagenübergreifend optimierter Weise geregelt wird.

Die zentrale Steuerung CTL weist ein lernbasiertes, signalanlagenübergreifendes Schadstoffprädiktionsmodul SPM sowie ein lernbasiertes, signalanlagenübergreifendes Kalibrierungsmodul KM auf. Das Schadstoffprädiktionsmodul SPM und das Kalibrierungsmodul KM sind wie oben beschrieben trainiert.

Dem Kalibrierungsmodul KM werden die zur zentralen Steuerung CTL übermittelten Verkehrsdaten VD1, VD2, Schadstoffdaten SD1, SD2 sowie Umgebungsdaten UD1 und UD2 als Eingabedaten für dessen trainiertes Kalibrierungsmodell zugeführt. Als weitere Eingabedaten für das Kalibrierungsmodell werden dem Kalibrierungsmodul KM von Referenz-Messstationen RMS des Verkehrsgebiets VG gemessene Referenz-Schadstoffdaten RSD zugeführt. Als resultierende Ausgabedaten gibt das Kalibrierungsmodul KM, wie oben bereits beschrieben, kalibrierte Schadstoffdaten KSD aus und übermittelt diese zum Schadstoffprädiktionsmodul SPM als kalibrierte Eingabedaten für dessen Schadstoffprädiktionsmodell. Als weitere Eingabedaten für das Schadstoffprädiktionsmodell werden dem Schadstoffprädiktionsmodul SPM die Verkehrsdaten VD1 und VD2, die Umgebungsdaten UD1 und UD2 sowie die Referenz-Schadstoffdaten RSD zugeführt. Als resultierende Ausgabedaten gibt das Schadstoffprädiktionsmodell des Schadstoffprädiktionsmoduls SPM eine prädizierte Schadstoffverteilung PSD aus. Vorzugsweise kann die prädizierte Schadstoffverteilung PSD für die Referenz-Messstationen RMS prädizierte Schadstoffwerte umfassen.

Die prädizierte Schadstoffverteilung PSD wird vom Schadstoffprädiktionsmodul SPM zu einem signalanlagenübergreifenden Optimierungsmodul OM der zentralen Steuerung CTL übermittelt. Darüber hinaus werden zum Optimierungsmodul OM die aktuell gemessenen Verkehrsdaten VD1 und VD2, die aktuell gemessenen Schadstoffdaten SD1 und SD2 sowie die Umgebungsdaten UD1 und UD2 übermittelt. Das Optimierungsmodul OM dient zur signalanlagenübergreifenden Optimierung der Zielwerte für die lokalen Zielgrößen VD1, VD2, SD1 und SD2 anhand der prädizierten Schadstoffverteilung PSD, der aktuell gemessenen Verkehrsdaten VD1 und VD2, der aktuell gemessenen Schadstoffdaten SD1 und SD2 sowie der Umgebungsdaten UD1 und UD2, um so den Verkehr im ganzen Verkehrsgebiet VG in signalanlagenübergreifend optimierter Weise zu regeln.

Zu diesem Zweck wird für das Verkehrsgebiet VG ein globales Optimierungsziel OZ für eine oder mehrere signalanlagenübergreifende Optimierungsgrößen vorgegeben. Als Optimierungsgröße wird typischerweise eine verkehrsrelevante und/oder umweltrelevante, für das gesamte Verkehrsgebiet VG oder Teile hiervon quantifizierbare Größe oder eine gewichtete Kombination derartiger Größen verwendet. Die Optimierungsgröße kann insbesondere eine Gesamtschadstoffkonzentration im Verkehrsgebiet VG, Schadstoffkonzentrationen an bestimmten Orten, einen Gesamtverkehrsdurchsatz, Gesamtwartezeiten oder einen spezifischen Verkehrsdurchsatz oder spezifische Wartezeiten an bestimmten Orten oder für bestimmte Verkehrsteilnehmer betreffen.

Im vorliegenden Ausführungsbeispiel wird die Optimierungsgröße aus der prädizierten Schadstoffverteilung PSD, den aktuell gemessenen Verkehrsdaten VD1 und VD2, den aktuell gemessenen Schadstoffdaten SD1 und SD2 sowie den Umgebungsdaten UD1 und UD2 als eine gewichtete Kombination von Schadstoffverteilung, Gesamtverkehrsdurchsatz und Gesamtwartezeiten ermittelt. Die Optimierungsgröße kann insbesondere durch eine sogenannte Belohnungsfunktion, Kostenfunktion oder Verlustfunktion berechnet werden.

Als signalanlagenübergreifendes Optimierungsziel OZ kann vorgegeben sein, eine oder mehrere Optimierungsgrößen zu minimieren, zu verringern, unterhalb eines vorgegebenen Schwellwerts zu halten oder in sonstiger Weise zu optimieren. Insbesondere kann als Optimierungsziel OZ vorgegeben sein, unter der Nebenbedingung einer Nichtüberschreitung eines Schadstoffgrenzwerts einen Gesamtverkehrsdurchsatz zu erhöhen und/oder eine Gesamtwartezeit zu verringern. Insbesondere kann als Nebenbedingung vorgesehen sein, einen Schadstoffgrenzwert an den Referenz-Messstationen RMS nicht zu überschreiten. Hierfür können insbesondere für die Referenz-Messstationen RMS prädizierte Schadstoffwerte herangezogen werden.

Zur Implementierung des Optimierungsziels OZ können spezifische Optimierungsstrategien durch Vorgabe geeigneter Gewichtungen für verschiedene verkehrsrelevante oder umweltrelevante Optimierungsgrößen in einer Belohnungsfunktion abgebildet werden. Beispielsweise kann ein Verkehrsdurchsatz in Verkehrskorridoren mit unterdurchschnittlicher Schadstoffbelastung spezifisch erhöht werden, während ein Verkehrszufluss in Regionen mit überdurchschnittlicher oder grenzwertnaher Schadstoffbelastung spezifisch eingeschränkt wird. Darüber hinaus können anderweitig optimierte Verkehrsmuster in der Belohnungsfunktion abgebildet werden.

Zur Ermittlung der optimierten Zielwerte ZVD1, ZVD2, ZSD1, ZSD2 werden durch einen Variantengenerator VGEN des Optimierungsmoduls OM eine Vielzahl von signalanlagenspezifischen Zielwertvarianten ZWV generiert. Die generierten Zielwertvarianten ZWV werden vom Variantengenerator VGEN zu einem Selektionsmodul SEL übermittelt. Durch das Selektionsmodul SEL werden aus den Zielwertvarianten ZWV anhand der prädizierten Schadstoffverteilung PSD, der Verkehrsdaten VD1 und VD2, der Umgebungsdaten UD1 und UD2 sowie der lokalen Schadstoffdaten SD1 und SD2 diejenigen signalanlagenspezifischen Zielwerte ZVD1, ZSD1, ZVD2 und ZSD2 selektiert, durch die sich die signalanlagenübergreifende Optimierungsgröße dem vorgegebenen Optimierungsziel OZ annähert. Zur Ermittlung der optimierten Zielwerte ZVD1, ZSD1, ZVD2 und ZSD2 wird vorzugsweise eine Partikelschwarmoptimierung verwendet. Alternativ oder zusätzlich kann ein genetisches Optimierungsverfahren, ein lernbasiertes Optimierungsmodell, ein künstliches neuronales Netz und/oder ein Gradientenabstiegsverfahren eingesetzt werden.

Die selektierten, für das Verkehrsregelungsmodul VR1 spezifischen Zielwerte ZVD1 und ZSD1 werden vom Selektionsmodul SEL zum Verkehrsregelungsmodul VR1 übermittelt und dort dem trainierten Verkehrsregelungsmodell NR1 zusammen mit den lokal gemessenen Verkehrsdaten VD1, den lokal gemessenen Schadstoffdaten SD1 sowie Umgebungsdaten UD1 als Eingabedaten zugeführt. Entsprechend werden die für das Verkehrsregelungsmodul VR2 spezifischen Zielwerte ZVD2 und ZSD2 vom Selektionsmodul SEL zum Verkehrsregelungsmodul VR2 übermittelt und dort dem trainierten Verkehrsregelungsmodell NR2 zusammen mit den lokal gemessenen Verkehrsdaten VD2, den lokal gemessenen Schadstoffdaten SD2 sowie den Umgebungsdaten UD2 als Eingabedaten zugeführt. Die jeweiligen Zielwerte ZVD1, ZSD1, ZVD2 bzw. ZSD2 werden dem jeweiligen Verkehrsregelungsmodell NR1 bzw. NR2 anstelle der beim Training zugeführten, durch den Zielwertgenerator GEN des jeweiligen Verkehrsregelungsmoduls VR1 bzw. VR2 generierten Zielwerte zugeführt.

Abhängig von den zugeführten Eingabedaten erzeugt das trainierte Verkehrsregelungsmodell NR1 Steuerdaten CD1 als Ausgabedaten, die die Signalanlage S1 derart steuern, dass sich die Zielgrößen VD1 und SD1 den Zielwerten ZDV1 und ZSD1 annähern. Entsprechend erzeugt das trainierte Verkehrsregelungsmodell NR2 abhängig von den zugeführten Eingabedaten Steuerdaten CD2 als Ausgabedaten, die die Signalanlage S2 derart steuern, dass sich die Zielgrößen VD2 und SD2 den Zielwerten ZVD2 und ZSD2 annähern. Auf diese Weise können die Signalanlagen, hier S1 und S2 im Verkehrsgebiet VG in signalanlagenübergreifend optimierter Weise derart gesteuert werden, dass sich die Optimierungsgröße effektiv dem vorgegebenen Optimierungsziel OZ annähert.

Optional kann vorgesehen sein, dass Navigationsgeräte oder andere Steuerungen im Verkehrsgebiet VG durch ein lernbasiertes Verkehrsregelungsmodul anhand von Verkehrsdaten und von der zentralen Steuerung CTL optimierten Zielwerten für verkehrsrelevante Zielgrößen optimiert gesteuert werden.

Mittels der Erfindung können Schadstoffbelastungen im Verkehrsgebiet VG sowie ein Verkehrsdurchsatz oder Wartezeiten effektiv kontrolliert und global optimiert werden. Dabei können existierende verkehrstechnische Anlagen in vorteilhafter Weise einbezogen und genutzt werden.

## Patentansprüche

1. Computerimplementiertes Verfahren zur Verkehrsregelung, wobei
a) mehrere Signalanlagen (S1, S2) eines Verkehrsgebiets (VG) jeweils durch ein lernbasiertes Verkehrsregelungsmodul (VR1, VR2) gesteuert werden, das darauf trainiert ist, die jeweilige Signalanlage (S1, S2) anhand von Verkehrsdaten (VD1, VD2) und einem vorgebbaren Zielwert (ZVD1, ZVD2, ZSD1, ZSD2) für eine verkehrsrelevante, signalanlagenspezifische Zielgröße (VD1, VD2, SD1, SD2) derart zu steuern, dass sich die signalanlagenspezifische Zielgröße dem Zielwert annähert,
b) Schadstoffdaten (SD1, SD2) über eine aktuelle Schadstoffbelastung des Verkehrsgebiets (VG) erfasst werden,
c) die Schadstoffdaten (SD1, SD2) zu einem lernbasierten, signalanlagenübergreifenden Schadstoffprädiktionsmodul (SPM) übermittelt werden, das darauf trainiert ist, eine Schadstoffverteilung im Verkehrsgebiet (VG) anhand von Schadstoffdaten zu prädizieren,
d) anhand einer durch das Schadstoffprädiktionsmodul (SPM) prädizierten Schadstoffverteilung (PSD) signalanlagenspezifische Zielwerte (ZVD1, ZVD2, ZSD1, ZSD2) ermittelt und jeweils zu einem Verkehrsregelungsmodul (VR1, VR2) übermittelt werden, und
e) durch das jeweilige Verkehrsregelungsmodul (VR1, VR2) die jeweilige Signalanlage (S1, S2) abhängig von aktuell gemessenen Verkehrsdaten (VD1, VD2) und dem jeweiligen signalanlagenspezifischen Zielwert (ZVD1, ZVD2, ZSD1, ZSD2) gesteuert wird.

2. Verfahren nach einem der vorhergehenden Ansprüche, **dadurch gekennzeichnet,**
**dass** das Schadstoffprädiktionsmodul (SPM) darauf trainiert ist, eine Schadstoffverteilung zusätzlich anhand von Verkehrsdaten und/oder Umgebungsdaten zu prädizieren, und
**dass** zur Prädiktion der Schadstoffverteilung aktuell gemessene Verkehrsdaten (VD1, VD2) und/oder Umgebungsdaten (UD1, UD2) zum Schadstoffprädiktionsmodul (SPM) übertragen werden.

3. Verfahren nach einem der vorhergehenden Ansprüche, **dadurch gekennzeichnet,**
**dass** ein jeweiliges Verkehrsregelungsmodul (VR1, VR2) darauf trainiert ist, die jeweilige Signalanlage (S1, S2) zusätzlich anhand von signalanlagenspezifischen Schadstoffdaten (SD1, SD2) und/oder Umgebungsdaten (UD1, UD2) derart zu steuern, dass sich die signalanlagenspezifische Zielgröße (VD1, VD2, SD1, SD2) dem Zielwert (ZVD1, ZVD2, ZSD1, ZSD2) annähert, und dass die Steuerung der jeweiligen Signalanlage (S1, S2) durch das jeweilige Verkehrsregelungsmodul (VR1, VR2) abhängig von aktuell gemessenen Schadstoffdaten (SD1, SD2) und/oder Umgebungsdaten (UD1, UD2) erfolgt.

4. Verfahren nach einem der vorhergehenden Ansprüche, **dadurch gekennzeichnet,**
**dass** zur Ermittlung der signalanlagenspezifischen Zielwerte (ZVD1, ZVD2, ZSD1, ZSD2) die prädizierte Schadstoffverteilung (PSD) zu einem Optimierungsmodul (OM) übermittelt wird, und dass durch das Optimierungsmodul (OM) signalanlagenspezifische Zielwertvarianten (ZWV) generiert werden, aus denen anhand der übermittelten prädizierten Schadstoffverteilung (PSD) signalanlagenspezifische Zielwerte (ZVD1, ZVD2, ZSD1, ZSD2) selektiert werden, durch die sich eine signalanlagenübergreifende Optimierungsgröße einem vorgegebenen Optimierungsziel (OZ) annähert.

5. Verfahren nach Anspruch 4, **dadurch gekennzeichnet,**
**dass** zur Ermittlung der signalanlagenspezifischen Zielwerte (ZVD1, ZVD2, ZSD1, ZSD2) signalanlagenspezifische Verkehrsdaten (VD1, VD2), Umgebungsdaten (UD1, UD2) und/oder Schadstoffdaten (SD1, SD2) zum Optimierungsmodul (OM) übermittelt werden, und
**dass** die Selektion der signalanlagenspezifischen Zielwerte (ZVD1, ZVD2, ZSD1, ZSD2) abhängig von den übermittelten signalanlagenspezifischen Verkehrsdaten (VD1, VD2), Umgebungsdaten (UD1, UD2) und/oder Schadstoffdaten (SD1, SD2) erfolgt.

6. Verfahren nach einem der vorhergehenden Ansprüche, **dadurch gekennzeichnet,**
**dass** zur Ermittlung der signalanlagenspezifischen Zielwerte (ZVD1, ZVD2, ZSD1, ZSD2) eine Partikelschwarmoptimierung, ein genetisches Optimierungsverfahren, ein lernbasiertes Optimierungsmodell und/oder ein Gradientenabstiegsverfahren verwendet wird.

7. Verfahren nach einem der vorhergehenden Ansprüche, **dadurch gekennzeichnet,**
**dass** lokal gemessene Schadstoffdaten (SD1, SD2) zu einem lernbasierten Kalibrierungsmodul (KM) übermittelt werden, das darauf trainiert ist, von Referenz-Messstationen (RMS) gemessene Referenz-Schadstoffdaten (RSD) anhand von lokal gemessenen Schadstoffdaten (SD1, SD2) zu reproduzieren, und
**dass** vom Kalibrierungsmodul (KM) ausgegebene, kalibrierte Schadstoffdaten (KSD) zur Prädiktion der Schadstoffverteilung und/oder zum Steuern einer jeweiligen Signalanlage (S1, S2) verwendet werden.

8. Verfahren nach einem der vorhergehenden Ansprüche, **dadurch gekennzeichnet,**
**dass** signalanlagenspezifische Verkehrsdaten (VD1, VD2), Umgebungsdaten (UD1, UD2) und/oder Schadstoffdaten (SD1, SD2) bei einer jeweiligen Signalanlage (S1, S2) gemessen werden.

9. Verfahren nach einem der vorhergehenden Ansprüche, **dadurch gekennzeichnet, dass**
eines der Verkehrsregelungsmodule (VR1, VR2), das Schadstoffprädiktionsmodul (SPM), ein Kalibrierungsmodul (KM) und/oder ein Optimierungsmodul (OM) ein Verfahren des bestärkenden Lernens, ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum implementiert.

10. Verfahren nach einem der vorhergehenden Ansprüche, **dadurch gekennzeichnet,**
**dass** Navigationsgeräte im Verkehrsgebiet (VG) durch ein lernbasiertes Verkehrsregelungsmodul gesteuert werden, das darauf trainiert ist, Navigationsgeräte anhand von Verkehrsdaten und einem vorgebbaren Zielwert für eine verkehrsrelevante Zielgröße derart zu steuern, dass sich die Zielgröße dem Zielwert annähert, und
**dass** die Navigationsgeräte durch das Verkehrsregelungsmodul abhängig von aktuell gemessenen Verkehrsdaten und einem anhand der prädizierten Schadstoffverteilung ermittelten Zielwert gesteuert werden.

11. Verkehrsregelungssystem (VRS), eingerichtet zum Ausführen eines Verfahrens nach einem der vorhergehenden Ansprüche.

12. Computerprogrammprodukt eingerichtet zum Ausführen eines Verfahrens nach einem der Ansprüche 1 bis 10.

13. Computerlesbares Speichermedium mit einem Computerprogrammprodukt nach Anspruch 12.
